# EUROPEAN PATENT APPLICATION

(11) **EP 3 306 796 A1**
(43) Date of publication of application: **11.04.2018**
(21) Application number: 16803352.0
(22) Date of filing: 01.06.2016
(51) Int. Cl.: H02K 33/02

(54) **METHOD OF MANUFACTURING LINEAR ACTUATOR, AND LINEAR ACTUATOR**

(30) Priority: 01.06.2015 JP 2015111644
(71) Applicant: Nidec Sankyo Corporation, Suwa-gun, Nagano 393-8511 (JP)
(72) Inventor: TAKEDA, Tadashi, Suwa-gun Nagano 393-8511 (JP); KITAHARA, Hiroshi, Suwa-gun Nagano 393-8511 (JP)
(74) Representative: Becker Kurig Straus
(86) International application number: PCT/JP2016/066095
(87) International publication number: WO 2016/194918

(57) **Abstract**

This application proposes a method of manufacturing a linear actuator with which it is possible to prevent variability in the stroke and resonant frequency of a movable body by means of a damper member inserted between the movable body and a fixed body. For example, this linear actuator 1 includes; a movable body 2, a fixed body 3, and a damper member 5 disposed between the movable body 2 and the fixed body 3. The fixed body 3 is provided with a coil bobbin 31 which supports the movable body 2 with freedom to move, with the interposition of a spring 4, and a base 32 which is overlapped by the side of the coil bobbin 31 on the side opposite to the movable body 2. During manufacture, a gap C is provided in the direction of movement of the movable body 2, between the coil bobbin 31 and the base 32, and by adjusting the gap dimension of the gap C, a separation distance D between a lower surface 11a of a core body 11 of the movable body 2 and a upper surface 32a of the base 32, between which the damper member 5 is to be inserted, is set to a specified dimension S, which is the length dimension of the damper member 5. Then, the coil bobbin 31 and the base 32 are secured using an adhesive 70 in a state in which the gap C has been formed.

## Description

### [Field of the Invention]

The present invention relates to a manufacturing method of a linear actuator and the linear actuator as well; the linear actuator being provided with a damper member between a movable element and a stationary element for suppressing resonance.

### [Background]

As a device for notifying of an incoming call and the like of a mobile phone by way of a vibration, there is proposed a liner actuator. A linear actuator described in Patent Document 1 is provided with a movable element having a permanent magnet, and a stationary element having a coil. The stationary element supports the movable element so as to be movable, by the intermediary of an elastic member, such as a spring component and the like. In the case of the linear actuator described in the document, an intensity level and a frequency of a vibration vary according to a driving signal supplied to the coil.

### [Prior Art Document]

### [Patent Document]

Patent Document 1: Japanese Patent Publication No. 2006-7161

### [Summary of Invention]

### [Problem to Be Solved]

In a linear actuator, sometimes a movable element may resonate, depending on a vibration frequency, at a time when the movable element vibrates.

In such a situation, it is conceivable for suppressing resonance to insert a damper member, which is extendable in a moving direction of the movable element, between a movable-element-side facing surface of the movable element and a stationary-element-side facing surface of a stationary element; the movable-element-side facing surface and the stationary-element-side facing surface facing each other in the moving direction of the movable element. Unfortunately, in this case, without controlling a dimension of a distance between the movable-element-side facing surface and the stationary-element-side facing surface where the damper member is inserted, in such a way as to make the dimension of the distance constant, a stroke and a resonance frequency of the movable element vary among manufactured products, due to the damper member inserted between the facing surfaces.

With the issue described above being taken into consideration, it is an issue of the present invention to provide a manufacturing method of a linear actuator and the linear actuator as well; the linear actuator being able to avoid variations in a stroke and a resonance frequency of the movable element, among manufactured products, due to the damper member inserted between the movable element and the stationary element.

### [Means to Solve the Problem]

In order to solve the issue described above, the present invention relates to a method for manufacturing a linear actuator having a movable element, a stationary element that supports the movable element by an intermediary of a spring member, and damper members inserted between a movable-element-side facing surface of the movable element and a stationary-element-side facing surface of the stationary element; the movable-element-side facing surface and the stationary-element-side facing surface facing each other in a moving direction of the movable element; the method includes: a provision of a first element and a second element to the stationary element; the second element having the stationary-element-side facing surface, and overlapping with the first element at a side opposite to the movable element in the moving direction; supporting the movable element with the first element by the intermediary of the spring member; setting a distance dimension between the movable-element-side facing surface and the stationary-element-side facing surface with a specified dimension corresponding to a length dimension of the damper members, by way of making a relative displacement between the first element and the second element in the moving direction, in a situation where a clearance is formed between the first element and the second element in the moving direction; and fixing the first element and the second element to each other by use of an adhesive, in the situation of having the clearance between the first element and the second element.

In the present invention, by way of adjusting a clearance dimension of the clearance provided between the first element supporting the movable element and the second element having the stationary-element-side facing surface, the distance dimension between the movable-element-side facing surface and the stationary-element-side facing surface is set with the specified dimension. Then, the first element and the second element are fixed to each other by use of the adhesive, in the situation of having the clearance with the clearance dimension after the adjustment. According to the present invention, the distance dimension between the movable-element-side facing surface and the stationary-element-side facing surface can be set with a dimension corresponding to the length dimension of the damper members, and therefore, it is possible to avoid variations in a stroke and a resonance frequency of the movable element, among manufactured products, due to the damper members inserted between the movable-element-side facing surface and the stationary-element-side facing surface.

In the present invention, it is preferable that the second element is provided with a through-hole passing through in the moving direction; after supporting the movable element by use of the first element, the second element is held by use of a jig equipped with a distance measuring device that is located at a side opposite to the movable element with respect to the second element; and a relative displacement is made between the first element and the jig in the moving direction so as to relatively move the first element and the second element; and meanwhile, the distance measuring device measures a distance up to the movable element by way of the through-hole in order to set the distance dimension with the specified dimension, based on the distance. According to this arrangement, the second element is provided with the through-hole so that it becomes easy to measure the distance up to the movable element by use of the distance measuring device. Therefore, the distance dimension between the movable-element-side facing surface and the stationary-element-side facing surface can accurately be set with the specified dimension.

In the present invention, it is preferable that the distance up to the member provided with the movable-element-side facing surface in the movable element is measured. According to this arrangement, a dimension up to the member, which the damper members contact, is measured, and therefore the distance dimension between the movable-element-side facing surface and the stationary-element-side facing surface can further accurately be set with the specified dimension.

In the present invention, it is preferable that the adhesive is applied to at least one of a first surface that overlaps with the second element in the first element, and a second surface that overlaps with the first element in the second element, before a relative displacement is made between the first element and the second element. According to this arrangement, it becomes easy to fix the first element and the second element to each other by use of the adhesive.

In the present invention, a shim having a thickness in the moving direction, which gradually changes in a direction perpendicular to the moving direction, may be inserted between the first element and the second element in order to form the clearance between the first element and the second element; and a relative displacement may be made between the first element and the second element in the moving direction, by way of changing an amount of insertion of the shim between the first element and the second element. According to this arrangement, the clearance between the first element and the second element can accurately be adjusted by use of the shim.

In this situation, the shim may be removed out of the clearance between the first element and the second element, after the adjustment; and in the meantime, the shim may as well be fixed between the first element and the second element by use of the adhesive.

Then, in the present invention, a linear actuator includes; a movable element; a stationary element that supports the movable element by an intermediary of a spring member; and damper members inserted between a movable-element-side facing surface of the movable element and a stationary-element-side facing surface of the stationary element; the movable-element-side facing surface and the stationary-element-side facing surface facing each other in a moving direction of the movable element; wherein, the stationary element is provided with a first element supporting the movable element by the intermediary of the spring member, and a second element having the stationary-element-side facing surface, and overlapping with the first element at a side opposite to the movable element in the moving direction; a clearance is formed between the first element and the second element in order to adjust a distance dimension between the movable-element-side facing surface and the stationary-element-side facing surface; and the first element and the second element are fixed by use of an adhesive, in a situation of having the clearance between the first element and the second element.

In the present invention, the clearance is provided between the first element supporting the movable element and the second element having the stationary-element-side facing surface in the stationary element; and therefore the distance dimension between the movable-element-side facing surface and the stationary-element-side facing surface can be set with a specified dimension corresponding to a length dimension of the damper members, by way of adjusting a clearance dimension of the clearance. Therefore, it is possible to avoid variations in a stroke and a resonance frequency of the movable element, among manufactured products, due to the damper members inserted between the movable-element-side facing surface and the stationary-element-side facing surface.

In the present invention, it is preferable that the stationary element is provided with a through-hole for measuring a distance up to the movable element by use of a distance measuring device that is located at a side opposite to the movable element with respect to the stationary element. According to this arrangement, it becomes easy to measure the distance up to the movable element by use of the distance measuring device; and therefore the distance dimension between the movable-element-side facing surface and the stationary-element-side facing surface can accurately be set with the specified dimension.

In the present invention, the linear actuator may include a shim having a thickness in the moving direction, which gradually changes in a direction perpendicular to the moving direction; and the shim may be inserted between the first element and the second element, and fixed by use of the adhesive. With such a shim provided, the clearance between the first element and the second element can accurately be adjusted by way of adjusting an amount of insertion of the shim between the first element and the second element.

### [Advantageous Effect of the Invention]

According to the present invention, the dimension of the distance between the movable-element-side facing surface of the movable element and the stationary-element-side facing surface of the stationary element, where the damper members are inserted, can be made to be the specified dimension. Therefore, it is possible to avoid a variance of the stroke and the resonance frequency of the movable element, due to the damper members inserted between the movable-element-side facing surface and the stationary-element-side facing surface.

### [Brief Description of the Drawings]

FIG. 1 is a perspective view of a linear actuator according to a first embodiment of the present invention.
FIG. 2 includes cross-sectional views of the linear actuator shown in FIG. 1.
FIG. 3 is an exploded perspective view of the linear actuator shown in FIG. 1.
FIG. 4 includes perspective views showing a coil bobbin, a driving coil, and a spring.
FIG. 5 is an explanatory drawing of a method for manufacturing the linear actuator shown in FIG. 1.
FIG. 6 is an explanatory drawing of another method for manufacturing the linear actuator shown in FIG. 1.

With reference to the drawings, a linear actuator according to an embodiment of the present invention is explained below.

### (General configuration)

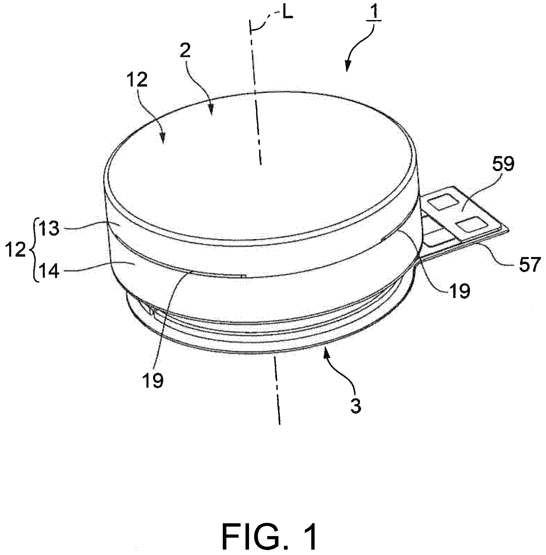

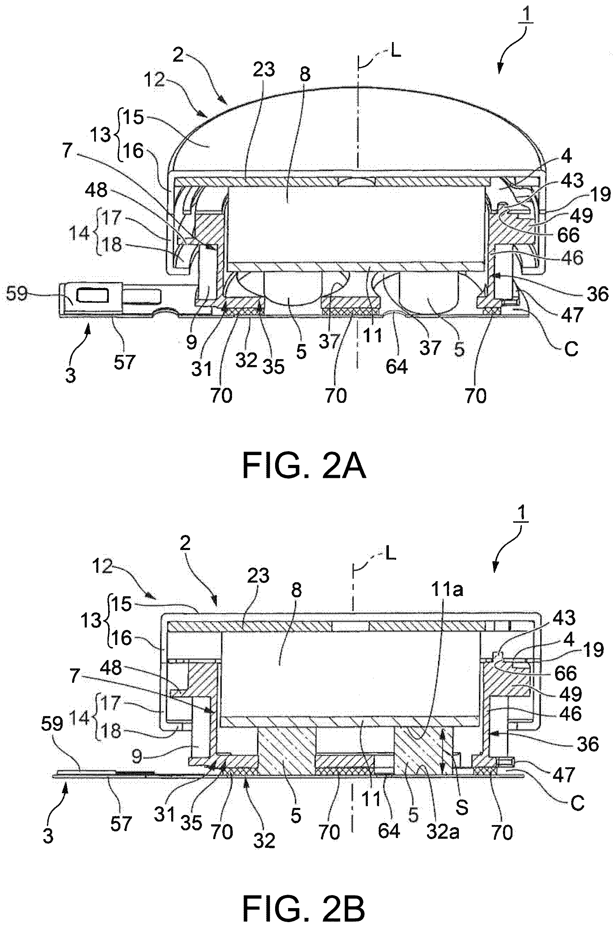

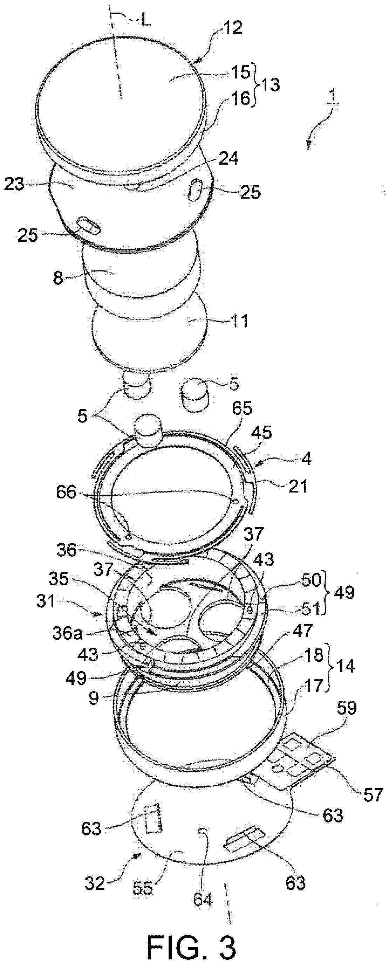

FIG. 1 is a perspective view of a linear actuator according to a first embodiment of the present invention. FIG. 2 includes cross-sectional views of the linear actuator shown in FIG. 1. In FIG. 2A, the cross section of the linear actuator is seen from an obliquely upward direction; and in FIG. 2B, the cross section of the linear actuator is seen from a direction perpendicular to a moving direction of a movable element. FIG. 3 is an exploded perspective view of the linear actuator shown in FIG. 1.

As shown in FIG. 1 through FIG. 3, a linear actuator 1 includes a movable element 2, a stationary element 3, and a spring (spring member) 4 that connects the movable element 2 and the stationary element 3. The stationary element 3 supports the movable element 2 in such a way as to be movable, by the intermediary of the spring 4. Between the movable element 2 and the stationary element 3, there are placed three damper members 5 being cylindrically shaped. The linear actuator 1 further includes a magnetic drive mechanism 7 in order to move the movable element 2. The magnetic drive mechanism 7 is provided with a permanent magnet 8 held by the movable element 2, and a drive coil 9 held by the stationary element 3. In the following explanation, a moving direction of the movable element 2 is dealt with as a direction of an axis line 'L'. The direction of the axis line 'L' is consistent with a central axis line of the permanent magnet 8 mounted on the movable element 2 and a central axis line of the drive coil 9 mounted on the stationary element 3. For the purpose of convenience, an upside and a downside of the linear actuator 1 are explained as follows, with reference to upward and downward directions in the drawings. That is to say; in the direction of the axis line 'L', a side where the stationary element 3 is positioned is a downside, meanwhile a side where the movable element 2 is positioned is an upside.

### (Movable element)

The movable element 2 is provided with the columnar permanent magnet 8 extending in the direction of the axis line 'L' (the moving direction of the movable element 2). The permanent magnet 8 is shaped so as to be flattened in such a way as to be short in the direction of the axis line 'L', and the permanent magnet 8 is magnetized with a north pole and a south pole in the direction of the axis line 'L'. The permanent magnet 8 is provided with a top end surface and a bottom end surface that are perpendicular to the direction of the axis line 'L'.

In the meantime, the movable element 2 is provided with a core member 11 that overlaps with the permanent magnet 8 from a downside, and a yoke member 12 that covers up the permanent magnet 8 from an upside as well as an outer circumferential side. The permanent magnet 8, the core member 11 and the yoke member 12 are placed coaxially. The core member 11 and the yoke member 12 are made of a magnetic material.

As show in FIG. 3, the core member 11 is a circular plate member having a constant thickness. A planar shape of the core member 11 is the same as a planar shape of the bottom end surface of the permanent magnet 8. The core member 11 is fixed to the bottom end surface of the permanent magnet 8 with an adhesive and the like. The core member 11 extends in a direction perpendicular to the axis line 'L'.

The yoke member 12 includes an upper yoke member 13 and a lower yoke member 14. As shown in FIG. 2, the upper yoke member 13 includes a circular end plate part 15 having a constant thickness, and an upper cylindrical part 16 protruding downward from an outer circumferential edge of the end plate part 15. The lower yoke member 14 includes a lower cylindrical part 17 that continues downward from a bottom end edge of the upper cylindrical part 16, and a protrusion plate part 18 protruding toward an inner circumferential side from a bottom end edge of the lower cylindrical part 17. The protrusion plate part 18 has a constant thickness, and its planar shape is annular. As shown in FIG. 1, the bottom end edge of the upper cylindrical part 16 is provided with cutout parts 19 at three circumferential positions. Each of the cutout parts 19 is provided for purpose of sandwiching and holding a movable-element-side connection part 21 of the spring 4, between the upper cylindrical part 16 and the lower cylindrical part 17, at a time of connecting the upper cylindrical part 16 and the lower cylindrical part 17 by welding and the like.

Moreover, as shown in FIG. 2 and FIG. 3, the yoke member 12 is provided with a magnetic plate 23 having a constant thickness, which is put into the upper yoke member 13 from a downside. The magnetic plate 23 is provided with a round center hole 24 at a center position, and three through-holes for welding 25, which are formed at outer circumferential fringe parts around the axis line 'L' at equal angular intervals. The magnetic plate 23 is fixed to the end plate part 15 of the upper yoke member 13, by way of welding that is carried out by making use of an open edge part of the three through-holes for welding 25. Thus, the magnetic plate 23 is laminated on the end plate part 15 in the direction of the axis line 'L'.

The yoke member 12 is fixed to the permanent magnet 8, by way of bonding a bottom end surface of the magnetic plate 23 to the top end surface of the permanent magnet 8 with an adhesive and the like. Under a situation where the yoke member 12 is fixed to the permanent magnet 8, as shown in FIG. 2, there is circumferentially formed a gap, having a constant clearance, between an annular outer-circumferential surface of the permanent magnet 8 and both the upper cylindrical part 16 as well as the lower cylindrical part 17. Meanwhile, at a time when a situation of the yoke member 12 being fixed to the permanent magnet 8 is observed from a lateral direction perpendicular to the direction of the axis line 'L', the protrusion plate part 18 is placed at a position that partially overlaps with the core member 11. Moreover, there is circumferentially formed a gap, having a constant clearance, between an annular inner-circumferential surface of the protrusion plate part 18 and an annular outer-circumferential surface of the core member 11.

### (Stationary element)

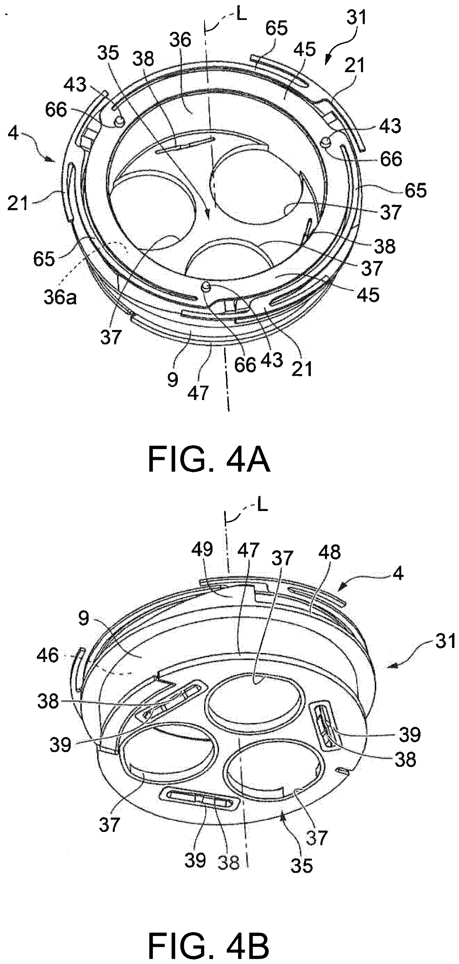

Next, the stationary element 3 is explained with reference to FIG. 2 through FIG. 4. FIG. 4A is a perspective view showing a situation where a coil bobbin is observed from an upper side; while the coil bobbin around which the drive coil 9 is wound, is provided with the spring 4; and meanwhile FIG. 4B is a perspective view showing a situation where the coil bobbin is observed from a lower side; while the coil bobbin around which the drive coil 9 is wound, is provided with the spring 4. As shown in FIG. 2 and FIG. 3, the stationary element 3 is provided with a coil bobbin 31 (a first element) around which the drive coil 9 is wound, and a plate-like base 32 (a second element) that overlaps with the coil bobbin 31 from a side opposite to the movable element 2. The coil bobbin 31 supports the movable element 2 by the intermediary of the spring 4 in such a way as to be movable in the direction of the axis line 'L'.

### (Coil bobbin)

The coil bobbin 31 is made of a resin material. As shown in FIG. 2, the coil bobbin 31 is provided with a bottom plate part 35 that faces the core member 11 of the movable element 2 in the direction of the axis line 'L', and a cylindrical part 36 that protrudes upward from the bottom plate part 35. An axis line 'L' of the cylindrical part 36 is consistent with an axis line 'L' of the permanent magnet 8.

As shown in FIG. 4A, three holes 37 for inserting the damper members are formed in the bottom plate part 35. The holes 37 for the damper members are individually provided around the axis line 'L' at equal angular intervals. Each of the holes 37 for inserting the damper members is an opening section having a larger diameter than the damper members 5 have. Therefore, as shown in FIG. 2; under a situation where the damper members 5 are individually positioned at inner circumferential sides of the holes 37 for inserting the damper members, a clearance is individually formed between the damper members 5 and opening section edges of the holes 37 for inserting the damper members in the bottom plate part 35. Meanwhile, a slit 38, which linearly stretches in a circumferential direction, is formed between two of the holes 37 for inserting the damper members, which are neighboring in a circumferential direction.

As shown in FIG. 4B, in a bottom surface 35a of the bottom plate part 35, at a position corresponding to each slit 38, there is provided a locating concave part 39 stretching along the slit 38. The slit 38 is positioned at a bottom of the locating concave part 39.

The cylindrical part 36 is provided with three spring retainer projections 43 on its annular top end surface 36a, as shown in FIG. 4A. The three spring retainer projections 43 are placed around the axis line 'L' at equal angular intervals. Each of the spring retainer projections 43 works as a retainer part for retaining a stationary-element-side connection part 45 of the spring 4, and the cylindrical part 36 supports the stationary-element-side connection part 45 from a lower side.

Moreover, as shown in FIG. 2, the cylindrical part 36 is provided with; a tubular torso part 46, wherein the drive coil 9 is wound around an outer circumferential surface of the tubular torso part 46; a lower flange part 47 being annular, which is expanded in its diameter at a lower side of the tubular torso part 46; and an upper flange part 48 being annular, which is expanded in its diameter at an upper side of the tubular torso part 46. Then, in a view from the direction of the axis line 'L', the upper flange part 48 has a larger diameter than the lower flange part 47 has. Accordingly, in a situation where the drive coil 9 is wound around the tubular torso part 46; the lower flange part 47 protrudes a little out of an outer circumferential surface of the drive coil 9 toward an outer side in a radial direction, while the upper flange part 48 protrudes quite a little out of the outer circumferential surface of the drive coil 9 toward the outer side in the radial direction, in comparison with the lower flange part 47.

Between the annular top end surface 36a of an outer circumferential surface of the cylindrical part 36 and the upper flange part 48, there are provided three reinforcing ribs 49 that reinforce the upper flange part 48. The three reinforcing ribs 49 are provided around the axis line 'L' at equal angular intervals. In a view from the direction of the axis line 'L', each of the reinforcing ribs 49 has its outer circumferential surface that overlaps with an outer circumferential surface of the upper flange part 48. Moreover, as shown in FIG. 3, each of the reinforcing ribs 49 is provided with; a rectangular leading surface 50 that leads to the annular top end surface 36a at an elevation being the same as the annular top end surface 36a; and a sloping surface 51 that slopes downward from the leading surface 50 toward one side in a circumferential direction. An end, at the one side in the circumferential direction, of the sloping surface 51 leads to a top surface of the upper flange part 48. The leading surface 50 of each of the reinforcing ribs 49 is displaced with respect to each of the spring retainer projections 43, in a circumferential direction, in such a way that there exists the sloping surface 51 at an outer circumferential side of each of the spring retainer projections 43.

### (Base)

As shown in FIG. 3, the base 32 is provided with a disk plate part 55 and a circuit board supporting part 57, being rectangular, which protrudes outward from the disk plate part 55 in a radial direction. A circuit board 59 is supported by the circuit board supporting part 57. A terminal of the drive coil 9 is connected to the circuit board 59.

The disk plate part 55 is provided with a locating plate 63. The locating plate 63 is formed by way of cutting and raising a part of the disk plate part 55. The coil bobbin 31 is installed on the base 32, by way of inserting the locating plate 63 into the locating concave part 39 of the bottom surface 35a of the bottom plate part 35, so as to locate the coil bobbin 31 in a direction perpendicular to the direction of the axis line 'L' as well as a circumferential direction.

Meanwhile, the disk plate part 55 is provided with a through-hole 64 that passes through in the direction of the axis line 'L'. At a time of being viewed from the direction of the axis line 'L' in a situation where the coil bobbin 31 is located and installed on the base 32, the through-hole 64 is formed at a position that overlaps with an opening section of one of the holes 37 for inserting the damper members. In the meantime, as shown in FIG. 2A, the through-hole 64 is formed at the position that does not overlap with one of the damper members 5 placed at an inner circumferential side of the one of the holes 37 for inserting the damper members.

The coil bobbin 31 is fixed to the base 32 by use of an adhesive. In a situation where the coil bobbin 31 is fixed to the base 32, the bottom plate part 35 stays away from the base in the direction of the axis line 'L'; and between the bottom plate part 35 and the base, there exists an adhesive layer of an adhesive 70 having a certain thickness. The adhesive is, for example, of a ultraviolet curable type.

### (Spring)

The spring 4 is a flat spring component, whose thickness direction is oriented in the direction of the axis line 'L', As shown in FIG. 3 and FIG. 4A, the spring 4 is provided with; the movable-element-side connection part 21 connected to the movable element 2 (the yoke member 12); the stationary-element-side connection part 45, being annular, connected to the stationary element 3 (the coil bobbin 31); and a plurality of arm parts 65 connected to the movable-element-side connection part 21 and the stationary-element-side connection part 45. The stationary-element-side connection part 45 is placed at an inner circumferential side with respect to the movable-element-side connection part 21 and the arm parts 65; and meanwhile the movable-element-side connection part 21 is placed at an outer circumferential side with respect to the arm parts 65.

The movable-element-side connection part 21 is divided into three parts in a circumferential direction. The arm parts 65 individually stretch in the circumferential direction from the three divided parts of the movable-element-side connection part 21. Each divided part of the movable-element-side connection part 21 is fixed to the movable element 2 by way of pinching between the upper yoke member 13 and the lower yoke member 14, while being inserted into each of the cutout parts 19 of the upper yoke member 13.

In the stationary-element-side connection part 45, there are formed retaining holes 66 into which the spring retainer projections 43 of the annular top end surface 36a of the coil bobbin 31 are individually fit. The spring 4 is connected to the coil bobbin 31 by way of inserting each of the spring retainer projections 43 into each of the retaining hole 66.

In a situation where the stationary-element-side connection part 45 of the spring 4 is connected to the coil bobbin 31, and meanwhile the movable-element-side connection part 21 is connected to the yoke member 12; the permanent magnet 8 of the movable element 2 is positioned at an inner circumferential side of the coil bobbin 31 of the stationary element 3, as shown in FIG. 2. In the meantime, the protrusion plate part 18 of the yoke member 12 is located between the lower flange part 47 and the upper flange part 48 of the coil bobbin 31. Thus, the tubular torso part 46 of the coil bobbin 31 and the drive coil 9 wound around the tubular torso part 46 are placed between an annular inner circumferential surface of the protrusion plate part 18 and an annular outer circumferential surface of the core member 11. Moreover, an annular outer circumferential surface of the upper flange part 48 of the coil bobbin 31 faces an inner circumferential surface of the lower cylindrical part 17 of the yoke member 12 across a narrow space thereof.

Under this situation, the upper flange part 48 of the coil bobbin 31 and the lower cylindrical part 17 of the yoke member 12 make up a first stopper mechanism to restrict a movable range of the movable element 2 at a time when the movable element 2 moves due to an external force in a direction perpendicular to the axis line 'L'. In the meantime, the upper flange part 48 of the coil bobbin 31 and the protrusion plate part 18 of the yoke member 12 make up a second stopper mechanism to restrict a movable range of the movable element 2 at a time when the movable element 2 moves upward due to an external force.

### (Damper members)

A length of each of the damper members 5 in the direction of the axis line 'L' is equal to a specified dimension 'S' to be described later, as shown in FIG. 2B. As shown in FIG. 2A, each of the damper members 5 is placed between the movable element 2 and the stationary element 3, while being inserted through each of the holes 37 for inserting the damper members, the holes 37 being provided in the bottom plate part 35 of the coil bobbin 31. Incidentally, a clearance is individually formed between the opening section edges of the holes 37 for inserting the damper members in the bottom plate part 35 and the damper members 5. As shown in FIG. 2B, each of the damper members 5 makes its top end surface contact with a bottom surface 11a (a movable-element-side facing surface) of the core member 11 of the movable element 2, and makes its bottom end surface contact with a top surface 32a (a stationary-element-side facing surface) of the base 32 of the stationary element 3.

Incidentally, the damper members 5 of the present embodiment are made of silicone gel having a needle entering level of 90 to 110. The needle entering level shows a value of an entered depth of a 1/4-cone needle stressed for five seconds, with a total load of 9.38 grams at 25 degrees Celsius, as specified in JIS-K-2207 or JIS-K-2220; wherein the entered depth being expressed in 1/10 mm. The smaller the value is, the harder the material is. Incidentally, fixing the damper members 5 to the core member 11 as well as fixing the damper members 5 to the base 32 are carried out by making use of the adhesive 70, a gluing agent, or an adherence property of the silicone gel.

### (Method for manufacturing the linear actuator)

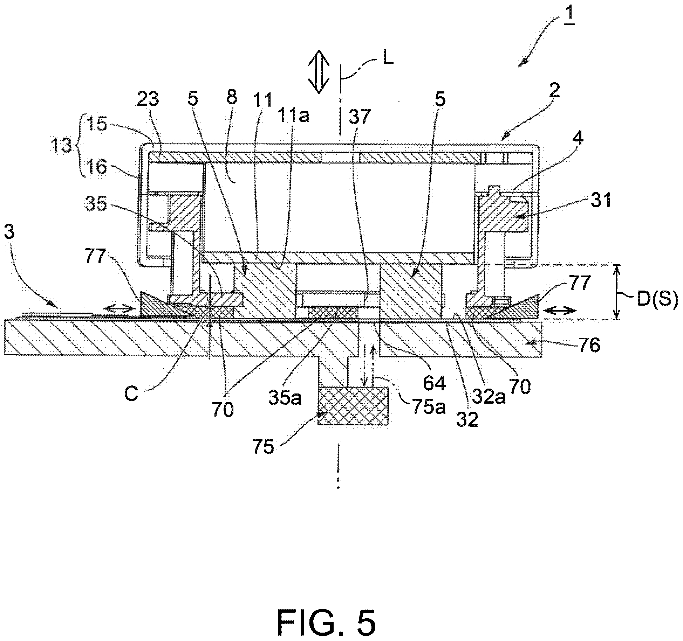

FIG. 5 is an explanatory drawing of a method for manufacturing the linear actuator 1. At a time of manufacturing the linear actuator 1, as shown in FIG. 5, the movable element 2 is supported by the coil bobbin 31 by the intermediary of the spring 4. In the meantime, the base 32 is held by a base holding jig 76 provided with a laser displacement meter 75 (distance measuring device).

In a situation where the base holding jig 76 holds the base 32, the laser displacement meter 75 is placed at a side opposite to the movable element 2 with respect to the base 32. Meanwhile, the laser displacement meter 75 is located at a position that enables an inspection light beam 75a (laser) from the laser displacement meter 75 to be radiated to the movable element 2 by way of the through-hole 64 provided to the base 32. In the present embodiment, the inspection light beam 75a is launched from the laser displacement meter 75 in a direction of the axis line 'L', in such a way as to be radiated onto the bottom surface 11a of the core member 11, by way of the through-hole 64 of the base 32 and one of the holes 37 for inserting the damper members of the coil bobbin 31. In such a way, the laser displacement meter 75 measures a distance from the laser displacement meter 75 to the bottom surface 11a of the core member 11.

Next, the adhesive 70 is applied to a plurality of spots on the bottom surface 35a of the bottom plate part 35 of the coil bobbin 31. Then, in a situation where the direction of the axis line 'L' of the coil bobbin 31 (i.e., the moving direction of the movable element 2) is orientated to a vertical direction, the coil bobbin 31 is placed onto the base 32. At the time of placing the coil bobbin 31 onto the base 32, the locating plate 63 of the base 32 is inserted into the locating concave part 39 of the bottom surface 35a in the bottom plate part 35 of the coil bobbin 31, so that the coil bobbin 31 is located in a direction perpendicular to the direction of the axis line 'L' as well as in a circumferential direction, with respect to the base 32.

Meanwhile, at the of time of placing the coil bobbin 31 onto the base 32, the damper members 5 are inserted between the bottom surface 11a of the core member 11 of the movable element 2 and the top surface 32a of the base 32. Moreover, at the of time of placing the coil bobbin 31 onto the base 32, a plurality of shims 77 are inserted between the base 32 and the coil bobbin 31 (the bottom plate part 35) so as to form a clearance 'C' between the base 32 and the coil bobbin 31. Each of the shims 77 is shaped to be like a wedge, in such a way that a thickness in a direction of the axis line 'L' gradually increases from an inner circumferential side toward an outer circumferential side. The shims 77 are individually placed around the axis line 'L' at equal angular intervals.

Subsequently, the shims 77 are individually moved at the same time from an outer circumferential side toward an inner circumferential side. Thus, by way of changing an amount of insertion of the shims 77 into a space between the base 32 and the coil bobbin 31 in this way, the coil bobbin 31 is shifted in the direction of the axis line 'L'. Meanwhile, in parallel with changing the amount of insertion of the shims 77, the laser displacement meter 75 measures a distance up to the movable element 2 (the core member 11). Then, based on the distance that is output from the laser displacement meter 75; a distance dimension 'D' between the bottom surface 11a of the core member 11 and the top surface 32a of the base 32 is set with the specified dimension 'S' that is the same as the length of the damper members 5 in the direction of the axis line 'L'.

Subsequently, the adhesive 70 is hardened to fix the coil bobbin 31 to the base 32. In a situation where the coil bobbin 31 is fixed to the base 32, the bottom plate part 35 and the base are separated from each other in the direction of the axis line 'L', and there exists an adhesive layer of the adhesive 70, having a certain thickness, between the bottom plate part 35 and the base. In the meantime, according to the present embodiment; the shims 77 are removed in a manufacturing step where the coil bobbin 31 and the base 32 are fixed to each other by use of the adhesive 70. Thus, a state shown in FIG. 2B is materialized so as to complete the linear actuator 1.

According to the present embodiment, the distance dimension 'D' between the bottom surface 11a of the core member 11 and the top surface 32a of the base 32 can be set with the specified dimension 'S' that is the same as the length of the damper members 5 in the direction of the axis line 'L'. Therefore, it is possible to avoid variations in a stroke and a resonance frequency of the movable element 2, among manufactured products, due to the damper members 5 inserted between the bottom surface 11a of the core member 11 and the top surface 32a of the base 32.

In other words, the distance dimension 'D' from the bottom surface 11a of the core member 11 to the top surface 32a of the base 32 is a value as a result of a calculation, in which a thickness of the end plate part 15 of the yoke member 12, a thickness of the magnetic plate 23, a thickness of the permanent magnet 8, and a thickness of the first core member 11 are subtracted from a total dimension of summing a height of the coil bobbin 31, a thickness of the spring 4, and a height from the spring 4 to a top surface of the end plate part 15 of the yoke member 12; and therefore , the value as a result of a calculation includes accumulation of dimensional tolerances of the components described above. Accordingly, it is not easy to obtain an accuracy of the distance dimension 'D' from the bottom surface 11a of the core member 11 the movable element 2 to the top surface 32a of the base 32, based on dimension accuracies of the components described above. In the meantime, for obtaining the accuracy of the distance dimension 'D' from the bottom surface 11a of the core member 11 of the movable element 2 to the top surface 32a of the base 32, based on the dimension accuracies of the components described above, the dimension accuracies of the components must be improved so that manufacturing costs of the components increase.

On the other hand, according to the present embodiment; the laser displacement meter 75 measures the distance up to the movable element 2 (the core member 11) that is one of the members which the damper members 5 contact, and then a clearance dimension of the clearance 'C' between the coil bobbin 31 and the base 32 in the direction of the axis line 'L' is adjusted according to the distance, in such a way that the distance dimension 'D' from the bottom surface 11a of the core member 11 to the top surface 32a of the base 32 is set with the specified dimension 'S'. Therefore, without any relation to the dimensional tolerances of the components, the dimension from the bottom surface 11a of the core member 11 of the movable element 2 to the top surface 32a of the base 32 can be set with the specified dimension 'S' corresponding to the length dimension of the damper members 5.

Furthermore, according to the present embodiment; a distance between the bottom surface 11a of the core member 11 and the top surface 32a of the base 32 is set with the specified dimension 'S' that is the same as the length dimension of the damper members 5, and therefore a stroke of the movable element 2 can be secured.

Incidentally, though the shims 77 inserted between the coil bobbin 31 and the base 32 in a manufacturing step of manufacturing the linear actuator 1 are removed in the embodiment described above, these shims 77 may remain fixed to the coil bobbin 31 and the base 32 by use of the adhesive 70, without being removed.

Moreover, though the distance up to the movable element 2 is measured by use of the laser displacement meter 75 in the embodiment described above, a displacement meter of a mechanical type for measuring a distance by use of a measuring rod and the like may be used instead of such a displacement meter of an optical type. In such a case, a measuring rod is made to contact the movable element 2 by way of the through-hole 64, in order to measure the distance.

### (Another method for manufacturing the linear actuator)

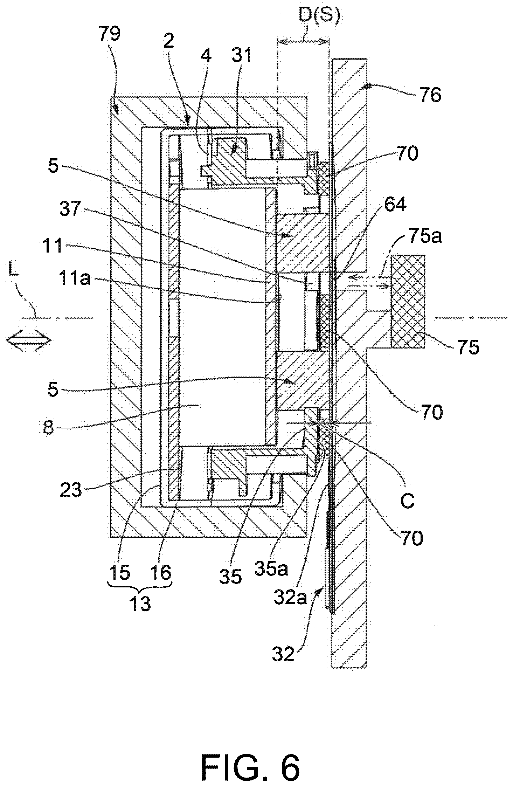

Next, another method for manufacturing the linear actuator 1 without using the shims 77 is explained with reference to FIG. 6. FIG. 6 is an explanatory drawing of another method for manufacturing the linear actuator 1.

At a time of manufacturing the linear actuator 1 by way of the manufacturing method of the present embodiment; at first, the movable element 2 is supported by the coil bobbin 31 by the intermediary of the spring 4. Then, the coil bobbin 31 supporting the movable element 2 is held by a movable-element-side holding jig 79, in a situation where the movable element 2 does not move in the direction of the axis line 'L'. Furthermore, a situation is made in such a way that the adhesive 70 is applied to a plurality of spots on the bottom surface 35a of the bottom plate part 35 of the coil bobbin 31. At this time, a positional relationship between the movable element 2, under conditions of being held by the movable-element-side holding jig 79, and the coil bobbin 31 is the same as a positional relationship between the movable element 2, under conditions where the coil bobbin 31 supports the movable element 2 while the direction of the axis line 'L' (the moving direction of the movable element 2) being consistent with a vertical direction, and the coil bobbin 31.

In parallel with the conditions described above, the base 32 is held by the base holding jig 76 provided with the laser displacement meter 75 (distance measuring device). In a situation where the base 32 is held by the base holding jig 76, the laser displacement meter 75 is placed at a side opposite to the movable element 2 with respect to the base 32. Meanwhile, the laser displacement meter 75 is located at a position that enables an inspection light beam 75a (laser) from the laser displacement meter 75 to be radiated to the movable element 2 by way of the through-hole 64 provided to the base 32. The inspection light beam 75a is launched from the laser displacement meter 75 in a direction of the axis line 'L', in such a way as to be radiated onto the bottom surface 11a of the core member 11, by way of the through-hole 64 of the base 32 and one of the holes 37 for inserting the damper members of the coil bobbin 31. In such a way, the laser displacement meter 75 measures a distance up to the bottom surface 11a of the core member 11.

Then, in a situation where a clearance 'C' is formed between the coil bobbin 31 and the base 32 in the direction of the axis line 'L'; a relative displacement in the direction of the axis line 'L' is made between the movable-element-side holding jig 79 and the base holding jig 76 so as to relatively move the coil bobbin 31 and the base 32 in the direction of the axis line 'L'. In the present embodiment, while the base holding jig 76 is kept stationary, the movable-element-side holding jig 79 is moved in relation to the base holding jig 76. Moreover, in parallel with the relative displacement between the movable-element-side holding jig 79 and the base holding jig 76, the laser displacement meter 75 measures a distance up to the movable element 2 (the core member 11). Then, based on the distance that is output from the laser displacement meter 75; a distance dimension 'D' between the bottom surface 11a of the core member 11 and the top surface 32a of the base 32 is set with the specified dimension 'S' that is the same as the length of the damper members 5 in the direction of the axis line 'L'.

Subsequently, the adhesive 70 is hardened to fix the coil bobbin 31 to the base 32. In a situation where the coil bobbin 31 is fixed to the base 32, the bottom plate part 35 and the base are separated from each other in the direction of the axis line 'L', and there exists an adhesive layer of the adhesive 70, having a certain thickness, between the bottom plate part 35 and the base. Thus, a state shown in FIG. 2B is materialized so as to complete the linear actuator 1.

According to the manufacturing method of the present embodiment as well, the distance dimension 'D' between the bottom surface 11a of the core member 11 and the top surface 32a of the base 32 can be set with the specified dimension 'S' that is the same as the length of the damper members 5 in the direction of the axis line 'L'. Therefore, it is possible to avoid variations in a stroke and a resonance frequency of the movable element 2, among manufactured products, due to the damper members 5 inserted between the bottom surface 11a of the core member 11 and the top surface 32a of the base 32. Furthermore, according to the present embodiment; a distance between the bottom surface 11a of the core member 11 and the top surface 32a of the base 32 is set with the specified dimension 'S' that is the same as the length dimension of the damper members 5, and therefore a stroke of the movable element 2 can be secured.

Incidentally, according to the manufacturing method of the present embodiment as well, a displacement meter of a mechanical type may be used instead of the displacement meter of the optical type.

### [Reference Numerals]

1. linear actuator
2. movable element
3. stationary element
4. spring (spring member)
5. damper members
11. core member
11a. bottom surface of the core member (movable-element-side facing surface)
31. coil bobbin (first element)
32. base (second element)
32a. top surface of the base (stationary-element-side facing surface, i.e., second surface)
35a. bottom surface the bottom plate part (first surface)
64. through-hole
70. adhesive
75. laser displacement meter (distance measuring device)
76. base holding jig (jig)
77. shims
'C' clearance
'D' distant dimension
'L' axis line (moving direction)
'S' specified dimension

## Claims

1. A method for manufacturing a linear actuator having a movable element, a stationary element that supports the movable element by an intermediary of a spring member, and damper members inserted between a movable-element-side facing surface of the movable element and a stationary-element-side facing surface of the stationary element; the movable-element-side facing surface and the stationary-element-side facing surface facing each other in a moving direction of the movable element; the method comprising:
a provision of a first element and a second element to the stationary element; the second element having the stationary-element-side facing surface, and overlapping with the first element at a side opposite to the movable element in the moving direction;
supporting the movable element with the first element by the intermediary of the spring member;
setting a distance dimension between the movable-element-side facing surface and the stationary-element-side facing surface with a specified dimension corresponding to a length dimension of the damper members, by way of making a relative displacement between the first element and the second element in the moving direction, in a situation where a clearance is formed between the first element and the second element in the moving direction; and
fixing the first element and the second element to each other by use of an adhesive, in the situation of having the clearance between the first element and the second element.

2. The method for manufacturing a linear actuator according to claim 1;
wherein, the second element is provided with a through-hole passing through in the moving direction;
after supporting the movable element by use of the first element, the second element is held by use of a jig equipped with a distance measuring device that is located at a side opposite to the movable element with respect to the second element; and
a relative displacement is made between the first element and the jig in the moving direction so as to relatively move the first element and the second element; and meanwhile, the distance measuring device measures a distance up to the movable element by way of the through-hole in order to set the distance dimension with the specified dimension, based on the distance.

3. The method for manufacturing a linear actuator according to claim 2;
wherein, the distance measuring device measures a distance up to a member provided with the movable-element-side facing surface in the movable element.

4. The method for manufacturing a linear actuator according to any one of claim 1 through claim 3;
wherein, the adhesive is applied to at least one of a first surface that overlaps with the second element in the first element, and a second surface that overlaps with the first element in the second element, before a relative displacement is made between the first element and the second element.

5. The method for manufacturing a linear actuator according to any one of claim 1 through claim 4;
wherein, a shim having a thickness in the moving direction, which gradually changes in a direction perpendicular to the moving direction, is inserted between the first element and the second element in order to form the clearance between the first element and the second element; and
a relative displacement is made between the first element and the second element in the moving direction, by way of changing an amount of insertion of the shim between the first element and the second element.

6. The method for manufacturing a linear actuator according to claim 5;
wherein, the shim is fixed between the first element and the second element by use of the adhesive.

7. A linear actuator comprising:
a movable element;
a stationary element that supports the movable element by an intermediary of a spring member; and
damper members inserted between a movable-element-side facing surface of the movable element and a stationary-element-side facing surface of the stationary element; the movable-element-side facing surface and the stationary-element-side facing surface facing each other in a moving direction of the movable element;
wherein, the stationary element is provided with a first element supporting the movable element by the intermediary of the spring member, and a second element having the stationary-element-side facing surface, and overlapping with the first element at a side opposite to the movable element in the moving direction;
a clearance is formed between the first element and the second element in order to adjust a distance dimension between the movable-element-side facing surface and the stationary-element-side facing surface; and
the first element and the second element are fixed by use of an adhesive, in a situation of having the clearance between the first element and the second element.

8. The linear actuator according to claim 7;
wherein, the stationary element is provided with a through-hole for measuring a distance up to the movable element by use of a distance measuring device that is located at a side opposite to the movable element with respect to the stationary element.

9. The linear actuator according to either of claim 7 or claim 8;
wherein, the linear actuator includes a shim having a thickness in the moving direction, which gradually changes in a direction perpendicular to the moving direction; and
the shim is inserted between the first element and the second element, and fixed by use of the adhesive.
